**Europäisches Patentamt**

**European Patent Office**

**Office européen des brevets**

(11) Veröffentlichungsnummer: **0 185 138**
A2

# (12) EUROPÄISCHE PATENTANMELDUNG

(21) Anmeldenummer: **85110422.4**

(22) Anmeldetag: **20.08.85**

(51) Int. Cl.⁴: **H 04 M 1/72**

(30) Priorität: **16.11.84 DE 3441907**

(43) Veröffentlichungstag der Anmeldung:
**25.06.86 Patentblatt 86/26**

(84) Benannte Vertragsstaaten:
**AT CH DE FR GB LI NL SE**

(71) Anmelder: **ROBERT BOSCH GMBH**
**Postfach 50**
**D-7000 Stuttgart 1(DE)**

(72) Erfinder: **Blanschefski, Michael, Dipl.-Ing.**
**Prinzenallee 7**
**D-1000 Berlin 65(DE)**

(72) Erfinder: **Löscher, Günther, Dipl.-Ing.**
**Krontalstrasse 82**
**D-1000 Berlin 49(DE)**

(74) Vertreter: **Schmidt, Hans-Ekhardt**
**Robert Bosch GmbH Geschäftsbereich Elektronik Patent-**
**und Lizenzabteilung Forckenbeckstrasse 9-13**
**D-1000 Berlin 33(DE)**

(54) **Funknetz zum Übertragen von Informationen zwischen jeweils einem Paar von mehreren Funkstationspaaren.**

(57) Es wird ein Funknetz vorgeschlagen, das zum Übertragen von Informationen zwischen einem Paar (10, 11) von mehreren Funkstationspaaren über einen Funkkanal von n Funkkanälen dient. Da je eine Funkstation der Funkstationspaare eine nicht ortsgebundene tragbare Funkstation ist, soll deren Stromverbrauch möglichst gering gehalten werden. Außerdem soll der Verbindungsaufbau möglichst schnell vonstatten gehen. Aus diesem Grunde vereinbart jedes Funkstationspaar mindestens vor der ersten Inbetriebnahme eine bestimmte Zahl von freien Funkkanälen, wobei diese Zahl im Vergleich zu der Gesamtzahl der verfügbaren Funkkanäle gering ist. Die normalerweise über Funk getroffene Vereinbarung findet nach der Erfindung schon bei auf die Basisstation (10) aufgelegter tragbarer Funkstation (11) über eine galvanische Verbindung (12, 15) statt.

Fig. 1    Fig. 2

38/84

EK/PLI Scht-Li

15.11.1984

ROBERT BOSCH GMBH, 7000 Stuttgart 1

Funknetz zum Übertragen von Informationen zwischen
jeweils einem Paar von mehreren Funkstationspaaren

Stand der Technik

Die Erfindung geht von einem Funknetz nach der im Oberbegriff des
Anspruchs 1 angegebenen Gattung, das heißt von dem Gegenstand des
Hauptpatents ... (P 33 37 358.2), aus.

Es sind Funknetze bekannt (DE-OS 33 01 778), bei denen ein Paar
von Funksende- und -empfangsgeräten – im folgenden Funkstationspaar genannt – aus einer ortsfesten Funkstation und einer nicht
ortsgebundenen Funkstation besteht. Die ortsfeste Funkstation ist
mit dem Fernsprechnetz verbunden, und die nicht ortsgebundene
Funkstation ist vorzugsweise als in der Hand zu haltende Station
ausgebildet. Derartige Funknetze sind unter der Bezeichnung
"schnurloses Telefon" bekannt. Jeweils eine Funkstation eines
Funkgerätepaares kann über einen freien Funkkanal der insgesamt
n Funkkanäle des Funknetzes mit der anderen Funkstation desselben Funkstationspaares in Verbindung treten, um Informationen
in beiden Richtungen zu übertragen. Nach einem von der Deutschen
Bundespost geplanten Funknetz suchen die Empfangsteile der Funkstationen eines Funkstationspaares zunächst einen freien Funkkanal und senden dann auf diesem einen durch einen individuellen
Sicherungskode gekennzeichneten Hochfrequenzträger aus. Die
Empfangsteile der Funkstationen sprechen nur auf den Sicherungskode des eigenen Funkstationspaares an. Damit wird gewährleistet,
daß die zwischen einem Funkstationspaar zu übertragenden Informationen von keinem anderen Funkstationspaar abgehört werden können.
Die Empfangsteile müssen also alle n verfügbaren Funkkanäle des
Funknetzes laufend und sich zyklisch wiederholend abtasten, um zu

...

prüfen, ob auf einem Funkkanal ein mit dem für sie bestimmten
individuellen Sicherungskode modulierter Hochfrequenzträger vorhanden ist, damit sie sich auf diesen Funkanal synchronisieren
können. Bei dem von der Deutschen Bundespost geplanten Funknetz
sind n = 40 Funkkanäle vorgesehen, womit das Funknetz an sich
überdimensioniert sein wird, weil die Funkdichte in der
Bundesrepublik Deutschland zunächst noch gering sein wird und
weil die Reichweite für die Informationsübertragung zwischen
einem Funkstationspaar auf maximal 100 m begrenzt ist. Wegen
der großzügigen Dimensionierung des Funknetzes setzt somit das
laufende Abtasten der Funkkanäle nach einem für die betreffende
Funkstation bestimmten Anruf bzw. nach einem freien Funkkanal
ein dauerndes Eingeschaltetsein der Kanalsteuerungen und der
Empfangsteile voraus, wodurch unnötig viel Strom verbraucht
wird. Hinzu kommt noch, daß zum Beispiel, wenn eine nicht
ortsgebundene Funkstation auf dem ersten freien Funkkanal der
n Funkkanäle senden will und die ortsfeste Funkstation gerade
den zweiten Funkkanal abtastet, erst ein vollständiger Abtastzyklus vergeht, bevor die ortsfeste Funkstation den für sie
bestimmten Anruf erkennen kann.

Das Funknetz gemäß dem Hauptpatent hat den Vorteil, daß die
nicht ortsgebundenen Funkstationen des Funknetzes mit weniger
Strom auskommen, wodurch bei den nicht ortsgebundenen Funkstationen die Ladeintervalle für die wiederaufladbaren Stromquellen erheblich verlängert oder das Gewicht und die Abmessungen der Stromquellen verringert werden können. Zusätzlich
kommt der Verbindungsaufbau schneller zustande, da nicht die
vollständige Anzahl der verfügbaren Kanäle geprüft werden muß.

Aufgabe der Erfindung

Der vorliegenden Erfindung liegt die Aufgabe zugrunde, ein Funknetz gemäß dem Oberbegriff des Patentanspruchs 1 zu schaffen,
dessen Funktionsbereitschaft beschleunigt wird.

## Vorteile der Erfindung

Das erfindungsgemäße Funknetz mit den kennzeichnenden Merkmalen
des Patentanspruchs 1 hat den Vorteil, daß die Vereinbarung von
Funkkanälen bei einem Funkstationspaar bereits dann stattfinden
kann, wenn die tragbare Station auf der Basisstation abgelegt
ist. Auf diese Weise wird die bisher notwendige Zeit für die
Vereinbarung per Funk eingespart. Ein Anruf wird daher wie bei
einem herkömmlichen Fernsprechapparat sofort signalisiert.

## Zeichnung

Ein Ausführungsbeispiel der Erfindung ist in der Zeichnung
an Hand zweier Figuren dargestellt und in der nachfolgenden
Beschreibung näher erläutert. Die Zeichnung zeigt in

Fig. 1   eine Seitenansicht einer erfindungsgemäßen
         Basisstation und

Fig. 2   eine Seitenansicht einer erfindungsgemäßen
         tragbaren Station.

## Beschreibung der Erfindung

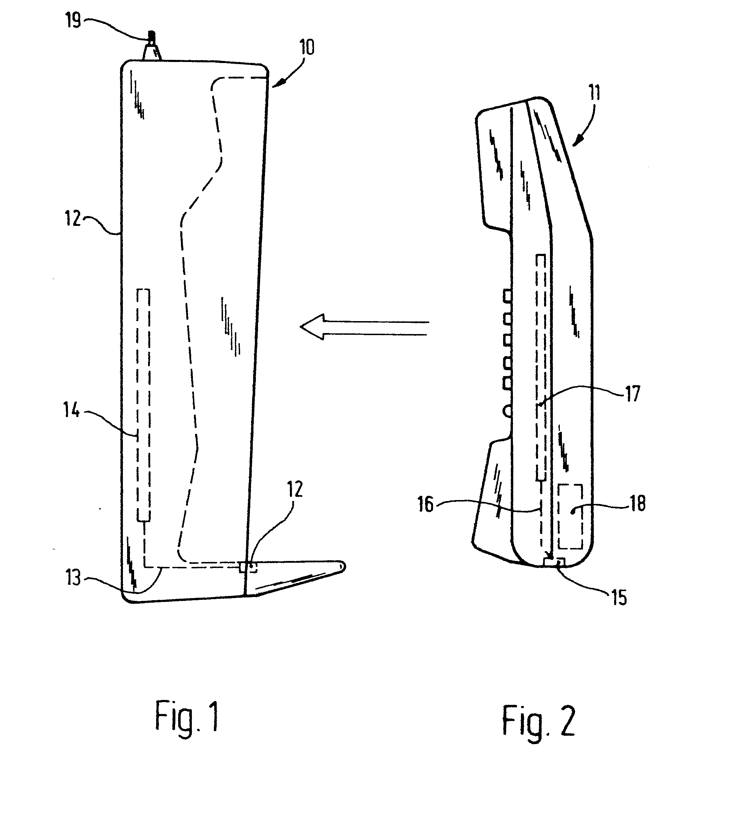

In einem erfindungsgemäßen Funknetz mit mehreren Funkstationspaaren aus je einer ortsfesten Funkstation 10 (Fig. 1) und einer
nicht ortsgebundenen, tragbaren Funkstation 11 (Fig. 2) vereinbaren und speichern die Funkstationen eines jeden Stationspaares
aus n verfügbaren Funkkanälen des Funknetzes mindestens vor der
ersten Inbetriebnahme $n_1$ freie Funkkanäle, wobei $n_1$ eine Zahl
ist, die wesentlich kleiner als n ist. Die Vereinbarung erfolgt
normalerweise per Funk. Ist jedoch die tragbare Funkstation 11
auf der ortsfesten Funkstation 10 abgelegt, so darf nach den Vorschriften der Deutschen Bundespost kein Funkverkehr stattfinden.
Bei einem erfindungsgemäßen Funkstationspaar weist die ortsfeste
Funkstation 11 einen Kontakt 12 auf, der über eine Leitung 13 mit
einer Schaltung 14 dieser Station verbunden ist. Die tragbare

...

Station 11 ist mit einem entsprechenden Gegenkontakt 15 versehen,
der über eine Leitung 16 mit einer Schaltung 17 der tragbaren
Station verbunden ist. Über die bei auf die Basisstation 10 aufgelegter tragbarer Station 11 miteinander in Eingriff stehenden
Kontakte findet die Vereinbarung von Funkkanälen, vorzugsweise
mittels Datentelegramme, statt. Das Kontaktpaar kann zu einer
Kontaktanordnung gehören, über die ohnehin ein in der tragbaren
Station vorhandener Akkumulator 18 aus dem Fernsprechnetz, an
das die ortsfeste Station 10 über eine Leitung 19 angeschlossen
ist, auf- bzw. nachgeladen wird.

Das Vereinbaren der für ein Funkstationspaar geltenden Funkkanäle
erfolgt vorzugsweise automatisch durch elektronische Mittel, die
aus der elektronischen Nachrichtenvermittlungstechnik bekannt sind.

38/84
EK/PLI Scht-Li
15.11.1984


ROBERT BOSCH GMBH, 7000 Stuttgart 1

Ansprüche

1. Funknetz zum Übertragen von Informationen zwischen jeweils einem Paar von mehreren Funkstationspaaren über einen Funkkanal von n Funkkanälen, wobei die Sendeteile eines jeden Funkstationspaares vor einer Übertragung einen individuellen Sicherungskode aussenden und die Empfangsteile der Funkstationen nur auf diesen Sicherungskode ansprechen, wobei jedes Funkstationspaar mindestens vor der ersten Inbetriebnahme $n_1 < n$ Funkkanäle vereinbart und speichert, das Empfangsteil nur für bestimmte, durch gleich lange Pausenzeiten unterbrochene Prüfzeiten zum Prüfen der beiden Funkkanäle auf ihren Belegungszustand eingeschaltet wird und die Pausenzeiten ein Vielfaches der Prüfzeiten betragen, nach Patent ... (Patentanmeldung P 33 37 358.2), dadurch gekennzeichnet, daß die Vereinbarung der $n_1$ Funkkanäle (K1 ...) bei einem aus Basisstation (10) und vorzugsweise als Handapparat ausgebildeter tragbarer Station (11) bestehenden Funkstationspaar bei aufgelegter tragbarer Station über eine galvanische Verbindung (12, 15) erfolgt.

2. Funknetz nach Anspruch 1, dadurch gekennzeichnet, daß die Basisstation (10) einen Kontakt (12) und die tragbare Station (11) einen Gegenkontakt (15) aufweisen und daß Kontakt und Gegenkontakt bei auf die Basisstation aufgelegter tragbarer Station in Eingriff stehen.

Fig. 1

Fig. 2